**Europäisches Patentamt**

**European Patent Office**

**Office européen des brevets**

(19)

(11) Veröffentlichungsnummer: **0 268 032**
B1

(12) # EUROPÄISCHE PATENTSCHRIFT

(45) Veröffentlichungstag der Patentschrift:
29.08.90

(51) Int. Cl.⁵: **G01N 27/333,** G01N 27/00,
G01N 27/40

(21) Anmeldenummer: 87113281.7

(22) Anmeldetag: **11.09.87**

(54) Festkörperelektrode zur Bestimmung von Natriumionen-konzentrationen in Lösungen.

(30) Priorität: **17.11.86 DE 3639312**

(43) Veröffentlichungstag der Anmeldung:
**25.05.88 Patentblatt 88/21**

(45) Bekanntmachung des Hinweises auf die Patenterteilung:
**29.08.90 Patentblatt 90/35**

(84) Benannte Vertragsstaaten:
**CH DE FR GB IT LI**

(56) Entgegenhaltungen:
**WO-A-84/01769**
**WO-A-84/01829**
**DE-A- 3 240 239**
**FR-A- 2 545 003**
**GB-A- 1 597 493**
**GB-A- 2 102 963**

**SENSORS AND ACTUATORS Band 15, Nr. 1,
September 1988, Seiten 33-49, Lausanne, Schweiz; P.
Fabry et al.: "Nasicon, an ionic conductor for
solid-state na+-selective electrode"**

(73) Patentinhaber: **Battelle-Institut e.V., Am
Römerhof 35 Postfach 900 160,
D-6000 Frankfurt/Main 90(DE)**

(72) Erfinder: **Ammende, Sonja, Hedwig-Dransfeld-Strasse 3,
D-6000 Frankfurt am Main 90(DE)**
Erfinder: **Erdmann, Hartmut, Dipl.-Ing., Sodener
Strasse 10, D-6374 Steinbach(DE)**
Erfinder: **Etzkorn, Heinz-Werner, Dr.,
Schumannstrasse 16, D-6392 Neu Anspach(DE)**
Erfinder: **Zucholl, Klaus, Dr., Niederfeldstrasse 123,
D-6800 Mannheim(DE)**

(74) Vertreter: **Sartorius, Peter, Dipl.-Ing., Battelle-Institut
e.V. Abteilung Patente Am Römerhof 35,
D-6000 Frankfurt am Main 90(DE)**

## Beschreibung

Die Erfindung betrifft einen zur Bestimmung von Natriumkonzentrationen in Lösungen mit einer als Festkörperelektrode ausgebildeten Nachweiselektrode mit einer natriumsensitiven Membran als Festkörperelektrolyt hoher Natriumionenieitfähiglkeit von mehr als 10-6 Siemens/cm bei Raumtemperatur und mit einer Ableitungselektrode.

Einen derartigen Sensor beschreibt die WO A 8 401 829. Die Ableitungskelektrode wird dort einer in einem Glasgefäß mit internem Elektrolyten untergebrachten internen Referenzelektrode gebildet. Dies ist nicht nur konstruktiv aufwendig, sondern es besteht auch die Gefahr, daß der Glasbehälter beim Gebrauch des Sensors zerbrichtn, wodurch dann der Sensor unbrauchbar wird.

Die GB A 1 597 493 beschreibt die Verwendung von Wolframbronze als Meßelement eines Sensors.

Ausgehend von einem Sensor mit den eingangs genannten Merkmalen liegt der Erfindung die Aufgabe zugrunde, diesen so auszugestalten, daß sich der Sensor durch eine hohe Selektivität für Natriumionen auszeichnet, verbunden mit einer geringen Querempfindlichkeit gegenüber anderen Ionen, insbesondere Kaliumionen, einem fühlbar verringertem Membranwiderstand und einer kurzen Ansprechzeit.

Auch soll der Sensor preisgünstig in hohen Stückzahlen gefertigt werden können, mechanisch robust sein und trocken aufbewahrt werden können.

Zur Lösung dieser Aufgabe ist die Erfindung dadurch gekennzeichnet, daß bei einem Aufbau des Sensors in Dickschichttechnik die Ableitelektrode aus Zweiphasenmischungen mit stabiler Na-Ionenaktivität besteht und direkt auf die Membran aufgebracht ist.

Die erfindungsgemäßen Sensoren lassen sich somit preisgünstig und mechanisch stabil in bewährter Dickschichttechnik herstellen, wobei alle den Sensor ausbildenden Elemente in Festkörpertechnik hergestellt sind.

Patentanspruch 2 gibt eine bevorzugte Ausbildung der Membran an.

Patentanspruch 3 gibt eine bevorzugte Ausbildung der Ableitelektrode an.

Die Erfindung wird im folgenden anhand von Ausführungsbeispielen näher erläutert Es zeigt:

Fig. 1 schematisch einen Sensor nach dem Stand der Technik;

Fig. 2 schematisch eine Vorrichtung ähnlich Fig. 1, wobei eine Festelektrolytmembran mit einer Festkörperableitelektrode verwendet wird;

Fig. 3 einen Aufbau, in Dickschichttechnik in einer ersten erfindungsgemäßen Ausführungsform und

Fig. 4 ebenfails einen Aufbau, in Dickschichttechnik bei einer zweiten erfindungsgemäßen Ausführungsform.

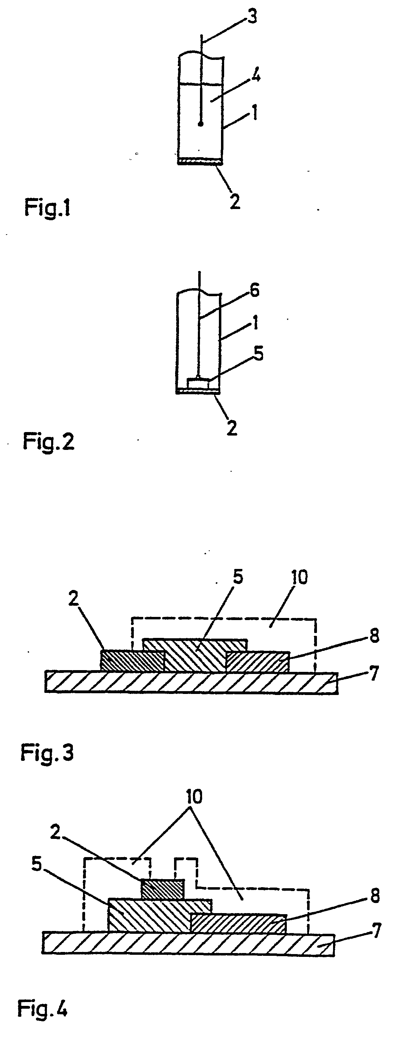

In Fig. 1 ist ein herkömmliches stabförmiges Gehäuse 1 gezeigt, dessen Boden durch eine Membran 2 aus einem natriumsensitiven Festkörperelektrolyten mit hoher NatriumionenLeitfähigkeit besteht.

In das Gehäuse reicht eine herkömmliche Bezugselektrode 3, die in einen Ektrolyten 4 eintaucht.

Der in Fig. 2 gezeigte Aufbau ist ähnlich, wobei aber hier eine Festkörper-Bezugselektrode 5 mit einem Ableitdraht 6 verwendet wird.

Fig. 3 zeigt den Sensor in Dickschichttechnik in einer ersten Ausführungsform. Auf ein Substrat 7 ist hierbei die Festelektrolxtmembran 2 aufgebracht sowie eine Kontaktierung 8 mit Ableitung. Die Festkörper-Bezugselektrode 5 ist ebenfalls auf das Substrat 7 aufgebracht, und zwar zwischen der Membran 2 und der Kontaktierung 8.

Es wird zusätzlich eine Abdeckung 10 vorgesehen, die einen Teil der Oberfläche der Membran 2 frei läßt.

Bei der Ausführungsform nach Fig. 4, die ebenfalls in Dickschichttechnik ausgeführt ist, ist die Festelektrolytmembran 2 auf die Oberseite der Festkörper-Bezugselektrode 5 aufgebracht und auch hier ist ein Teil der Oberfläche der Membran 2 von der Abdeckung freigelassen.

Die Feststoff-Bezugselektrode 5 besteht beispielsweise aus Natrium-Wolframbronzen, Natrium-Molybdänbronzen, Natrium oder Natriumlegierungen usf. (Zweiphasenmischungen). Für die Festelektrolytmembran 2 wird Nasicon der angegebenen Formel bevorzugt, wobei erfolgreiche Versuche mit $x = 2{,}0$ und $2{,}2$ ausgeführt wurden. Es sind aber auch andere $Na^+$-Ionenleiter hierfür geeignet, beispielsweise Nasiglas, Titsicon usf.

## Patentansprüche

1. Sensor zur Bestimmung von Natriumionenkonzentrationen in Lösungen mit einer als Festkörperelektrode ausgebildeten Nachweiselektrode mit einer natriumsensitiven Membran (2) als Festkörperelektrolyt hoher Natriumionenleitfähigkeit von mehr als $10^{-6}$ Siemens/cm bei Raumtemperatur und mit einer Ableitelektrode (5), dadurch gekennzeichnet, daß bei einem Aufbau des Sensors (2, 5, 8) in Dickschichttechnik die Ableitelektrode (5) aus Zweiphasenmischungen mit stabiler Na-Ionenaktivität besteht und direkt auf die Membran (2) aufgebracht ist.

2. Sensor nach Anspruch 1, dadurch gekennzeichnet, daß die natriumsensitive Membran (2) aus Nasicon der Formel

$$Na_{1+x} Zr_2 Si_x P_{3-x} O_{12} \text{ mit } 0 \leq x \leq 3 \text{ besteht.}$$

3. Sensor nach Anspruch 1 oder 2, dadurch gekennzeichnet, daß die Ableitelektrode (5) aus Natriumwolframbronze besteht.

4. Sensor nach einem der Ansprüche 1 bis 3, dadurch gekennzeichnet, daß eine Abdeckung (10) vorgesehen ist, die zumindest einen Teil der Membran (2) frei läßt.

## Claims

1. Sensor for the determination of sodium ion concentrations in solutions, said sensor being provided with a detector electrode executed as solid state electrode, with a sodium-sensitive membrane (2) as solid state electrolyte having a high sodium ion conductivity of more than $10^{-6}$ Siemens/cm at room temperature, and with a pick-up electrode (5), comprising: the pick-up electrode (5) of a structure of the sensor (2, 5, 8) in thick-film technology consisting of twophase mixtures with stable Na ion activity and being applied direct onto the membrane (2).

2. Sensor as claimed in Claim 1, wherein the sodium-sensitive membrane (2) consists of Nascion of the formula

$Na_{1+x} Zr_2 Si_x P_{3-x} O_{12}$ with $0 \leq x \leq 3$.

3. Sensor as claimed in Claim 1 or Claim 2, wherein the pick-up electrode (5) consists of sodium-tungsten bronze.

4. Sensor as claimed in any of Claims 1 to 3, wherein a cover (10) is provided, which leaves at least part of the membrane (2) uncovered.

**Revendications**

1. Capteur de détemination des concentrations en ions sodium dans des solutions avec une électrode de contrôle réalisée sous la forme d'un corps solide et comportant une membrane (2) sensible au sodium en tant qu'électrolyte solide présentant une conductibilité pour les ions sodium supérieure à 10–6 Siemens/cm à la température ambiante, et avec une électrode de dérivation (56), caractérisé en ce que, dans le cas d'une structure de capteur (2, 5, 8) selon la technique en couche épaisse, l'électrode de dérivation (5) se compose de mélanges diphasiques à activité stable des ions Na et est appliquée directement sur la membrane (2).

2. Capteur selon la revendication 1, caractérisé en ce que la membrane (2) sensible au sodium se compose de Nasicon de formule

$Na_{1+x}Zr_2Si_{ix}P_{3-x}O_{13}$, avec $0 \leq x \leq 3$.

3. Capteur selon la revendication 1 ou 2, caractérisé en ce que l'électrode de dérivation (5) se compose de bronze au sodium-tungstène.

4. Capteur selon l'une des revendications 1 à 3, caractérisé en ce qu'il est prévu un recouvrement (10) qui laisse libre au moins une partie de la membrane (2).

Fig.1

Fig.2

Fig. 3

Fig.4